# EUROPÄISCHE PATENTSCHRIFT

(11) **EP 4 502 942 B1**
(45) Veröffentlichungstag und Bekanntmachung des Hinweises auf die Patenterteilung: **09.09.2026**
(21) Anmeldenummer: 24216435.8
(22) Anmeldetag: 14.12.2022
(51) Int. Cl.: G06T 7/13, G06T 7/174, G06T 7/194, B60S 3/04

(54) **KAMERABASIERTE FAHRZEUGKONTURERFASSUNG FÜR FAHRZEUGBEHANDLUNGSANLAGEN**
CAMERA-BASED VEHICLE CONTOUR DETECTION FOR VEHICLE TREATMENT SYSTEMS
DÉTECTION DE CONTOUR DE VÉHICULE BASÉE SUR UNE CAMÉRA POUR DES INSTALLATIONS DE TRAITEMENT DE VÉHICULES

(30) Priorität: 14.12.2021 DE 102021133032
(43) Veröffentlichungstag der Anmeldung: 05.02.2025
(62) Dokumentnummer(n) der früheren Anmeldung(en) nach Art. 76 EPÜ: 22213342.3 / 4 198 894
(73) Patentinhaber: Otto Christ AG, 87734 Benningen (DE)
(72) Erfinder: Christ, Markus, 87700 Memmingen (DE); Spieß, Jonas, 87734 Benningen (DE)
(74) Vertreter: ERNICKE Patent- und Rechtsanwälte PartmbB

(56) Entgegenhaltungen:
- DE-U1- 202008 000 993
- US-A1- 2019 050 667
- YU YANG ET AL: "The car washing control method using 3D contour segmentation", 2013 13TH INTERNATIONAL CONFERENCE ON CONTROL, AUTOMATION AND SYSTEMS (ICCAS 2013), IEEE, 13 October 2015 (2015-10-13), pages 935 - 937, XP032838093, ISSN: 2093-7121, [retrieved on 20151223], DOI: 10.1109/ICCAS.2015.7364758

## Beschreibung

Die Erfindung liegt auf dem Gebiet der Konturerkennung von Fahrzeugen in Fahrzeugbehandlungsanlagen, insbesondere in Fahrzeugwaschanlagen, zur Verbesserung des Behandlungsvorgangs.

Eine Fahrzeugkontur beschreibt den Verlauf der Außenhaut eines Fahrzeugs, d.h. der Fahrzeugoberfläche, in einer oder mehreren Richtungen. Typischerweise wird die Seitenkontur des Fahrzeugs in einer oder mehreren Ebenen und/oder die Höhenkontur des Fahrzeugs in einer oder mehreren Ebenen verwendet, um die Behandlung an das individuelle Fahrzeug anpassen zu können. Beispielsweise kann die Bahn für eine Dachbürste in Kenntnis der Höhenkontur des Fahrzeugs schon vor Beginn des Behandlungsvorgangs geplant werden. Ebenso kann die Bahn und/oder die Neigung einer Seitenbürste in Kenntnis einer oder mehrerer Seitenkonturen des Fahrzeugs geplant bzw. optimiert werden.

Eine Fahrzeugkontur kann in verschiedenen für einen Computer oder eine Steuerung verarbeitbaren Datenstrukturen beschrieben werden, z.B. als Punktemenge, als geometrische Form, als eine Reihe von Abständen oder als mathematische Funktion. Die Fahrzeugkontur kann den gesamten oder einen teilweisen Umriss eines Fahrzeugs in einer oder mehreren Ebenen beschreiben. Eine Fahrzeugkontur wird vorzugsweise zwei- oder dreidimensional beschrieben. In der Regel ist eine Fahrzeugkontur eine gekrümmte Linie, d.h. keine gerade Linie. Eine komplexe dreidimensionale Fahrzeugoberfläche lässt sich durch mehrere Fahrzeugkonturen, die jeweils in einer bestimmten Ebene (z.B. mehrere senkrechtstehende zueinander versetzte Ebenen) geometrisch annähern.

Die Erfindung ist für verschiedene Arten von Fahrzeugbehandlungsanlagen einsetzbar, insbesondere für Portalwaschanlagen, Waschstraßen oder Polieranlagen. Die Fahrzeugbehandlungsanlagen können für PKW, LKW, Busse, Bahnen, Züge oder andere Arten von Fahrzeugen vorgesehen sein. Besonders vorteilhaft ist die hier offenbarte Technik für Portalwaschanlagen, bei denen ein fahrbares Waschportal an einem im Behandlungsbereich abgestellten Fahrzeug entlangfährt und dieses mit verschiedenen zum Fahrzeug hin beweglichen Aggregaten (z.B. Bürstenwalzen) reinigt. Auch für Waschstraßen, in denen das Fahrzeug durch die Waschstraße geschleppt wird, ist die Technik entsprechend einsetzbar.

Im Stand der Technik ist es bekannt die Form eines Fahrzeugs in einer Waschanlage mit Sensoren der Waschanlage zu vermessen oder Informationen zur Fahrzeugform aus Benutzereingaben oder einer Datenbank abzurufen. Durch die Kenntnis der Fahrzeugform kann das Behandlungsprogramm der Anlage an das jeweilige Fahrzeug und dessen Position in der Anlage angepasst werden.

In der Vergangenheit wurden bereits verschiedene Sensorkonzepte für die Vermessung der Fahrzeugform vorgeschlagen, z.B. Lichtschranken oder Laserscanner. Die bisherigen Konzepte brachten häufig keine ausreichende Robustheit bei der Erkennung oder erforderte kostenaufwendige Lösungen.

Besonders für die Steuerung bzw. Regelung der Behandlungsaggregate, die direkt mit der Fahrzeugoberfläche in Kontakt gebracht werden, z.B. Waschbürsten, oder die der Oberfläche mit konstantem Abstand folgen sollen (z.B. Trocknungsgebläse) ist der Abstand zum Fahrzeug und der Verlauf der Fahrzeugoberfläche wichtig, um einen gründlichen und zugleich schonenden Behandlungsvorgang zu ermöglichen. Gerade bei Sprüngen in der Fahrzeugoberfläche, z.B. an Spiegeln, Spoilern oder anderen Vorsprüngen, ist die Kenntnis der Fahrzeugkontur vorteilhaft, um eine vollständige Erfassung der Fahrzeugoberfläche durch die Behandlungsaggregate zu ermöglichen.

Aus dem Stand der Technik ist es bekannt, die Fahrzeugkontur während der Behandlung durch Messung des Bürstenwiderstands oder Messung des Abstands des Behandlungsaggregats zum Fahrzeug zu ermitteln. Außerdem ist es bekannt die Fahrzeugform durch Lichtschranken, Lichtgitter oder optische Abstandssensoren zu vermessen.

Verfahren, die die Fahrzeugform erst während der Vorbeifahrt eines Aggregats oder des ganzen Waschportals erfassen können, haben den Nachteil, dass die Information der Fahrzeugform nicht zur vorausschauenden Planung des Behandlungsvorgangs verwendet werden können. Die Kenntnis der Fahrzeugform entsteht erst nach und nach während des Behandlungsvorgangs. Außerdem können Hinterschneidungen in der Fahrzeugform (z.B. an Spoilern) mit diesen Verfahren nur schlecht oder gar nicht in die Behandlung einbezogen werden.

Ein weiterer Nachteil mancher vorbekannter Verfahren ist, dass die Informationen zur Fahrzeugform nicht in der tatsächlichen Position und Orientierung des Fahrzeugs vorliegen. Wenn die Anlage beispielsweise über Informationen aus einem CAD-Modell des Fahrzeugmodells verfügt, aber nicht weiß, wo das individuelle Fahrzeug in der Halle steht, müsste das Fahrzeug zusätzlich in Bezug zur Anlage lokalisiert werden. Die Anlage könnte z.B. wissen, wie hoch ein Fahrzeug ist, nicht aber wo genau das Dach des Fahrzeugs in der finalen Parkposition in der Anlage beginnt und wo es aufhört, um die Dachkontur präzise ansteuern zu können.

Aus der DE 20 2008 000 993 U1 ist die Erfassung einer dreidimensionalen Gesamtkontur eines Fahrzeugs mittels PMD-Kamera bekannt. Die ermittelte Kontur wird in einem gemeinsamen Koordinatensystem dargestellt und zur Steuerung von Behandlungsaggregaten verwendet.

Eine Veröffentlichung von Yu et al. 2015, "The car washing control method using 3D contour segmentation", 13th International Conference on Control, Automation and Systems ICCAS 2013, IEEE, 13. Oktober 2015, Seiten 935 - 937, ISSN: 2093-7121, DOI: 10.1109/ICCAS.2015.7364758 offenbart die Extraktion von Autokonturen aus 3D-Laserscanner-Punktwolken zur Steuerung einer Waschanlage mittels Entfernen von Hintergrund und Boden.

US 2019/0050667 A1 diskutiert die Detektion okkludierter Konturen mittels CNNs, die z.B. auf Fahrzeuge trainiert sind.

Die Erfindung liegt daher die Aufgabe zugrunde, eine verbesserte Technik zur Ermittlung einer oder mehrerer Fahrzeugkonturen eines zu behandelnden Fahrzeugs in einer Fahrzeugbehandlungsanlage aufzuzeigen.

Die Erfindung löst die Aufgabe mit mehreren Verfahren und Vorrichtungen, die eine gemeinsame erfinderische Idee verwirklichen. Die Erfindung ist in den unabhängigen Ansprüchen 1 und 13 definiert. Die abhängigen Ansprüche definieren bevorzugte Ausführungsbeispiele.

Die Offenbarung umfasst mehrere Aspekte, die gemeinsam zur Lösung der Aufgabe beitragen: ein computerimplementiertes Verfahren zur Ermittlung einer ortsbezogenen Fahrzeugkontur, ein Datensammelverfahren zum maschinellen Trainieren eines Konturerkennungssystems, ein Trainingsverfahren zum maschinellen Trainieren eines Konturerkennungssystems sowie ein Konturerkennungssystem und eine Fahrzeugbehandlungsanlage mit einem Konturerkennungssystem.

Mit der vorliegenden Erfindung können eine oder mehrere Fahrzeugkonturen kamerabasiert erkannt werden. Kameras bzw. die Verarbeitung von Kamerabildern haben den besonderen Vorteil, dass in einem Kamerabild ein hoher auswertbarer Informationsgehalt über das abgebildete Fahrzeug enthalten ist. Vorteilhafterweise ist die mindestens eine Kamera bezüglich der Anlage kalibriert, sodass in einem Kamerabild vorhandene Punkte durch Transformation auch in der Anlage lokalisierbar sind. Die Verarbeitung der Kamerabilder ermöglicht eine Erfassung ortsbezogener Fahrzeugkonturen.

Die mindestens eine Kamera ist vorzugsweise fest in der

Fahrzeugbehandlungsanlage montiert und in der Montageposition in Bezug auf ein ortsbezogenes Koordinatensystem der Fahrzeugbehandlungsanlage (Weltkoordinatensystem) kalibriert.

Ein besonderer Vorteil der Technik besteht darin, dass die Erkennung der Fahrzeugkontur(en) bereits vor Beginn des Behandlungsprogramms durchgeführt werden kann und die vollständige Fahrzeugkontur damit bereits zur Planung des Behandlungsvorgangs im Voraus zur Verfügung steht.

In der vorteilhaften Ausführungsform der Technik wird mindestens ein trainierbares KI-System, z.B. ein künstliches neuronales Netz, zur Erkennung der Fahrzeugkontur eingesetzt. Durch das Trainieren eines KI-Systems können insbesondere Kenntnisse aus einer Vielzahl von Behandlungsvorgängen zur Erkennung der Fahrzeugkonturen eingesetzt werden. Der Einsatz eines trainierbaren KI-Systems ist insbesondere in Kombination mit der kamerabasierten Erfassung des Fahrzeugs vorteilhaft. Kamerabilder sind mit dem hohen Informationsgehalt besonders geeignet für eine Verarbeitung durch KI-Systeme. Gegenüber klassischen Verarbeitungsverfahren können insbesondere semantische Zusammenhänge in Bildern verarbeitet werden, die bei einer klassisch deterministischen Sensordatenverarbeitung nicht oder schlecht erfassbar sind.

Besonders vorteilhaft ist die Sammlung von Daten zusätzlicher Sensoren zur Erkennung einer Fahrzeugkontur in Verbindung mit einem oder mehreren Kamerabildern mit einem Datensammelverfahren. Durch die Erfassung der Fahrzeugkontur mit weiteren Sensoren, z.B. Abstandssensoren in einem Waschportal während einer Vielzahl von Trainingsbehandlungen, die in einem Trainingsdatensatz mit zugehörigen Kamerabildern der vermessenen Fahrzeuge in Verbindung gebracht werden, können später im Betrieb des erfindungsgemäßen Verfahrens Fahrzeugkonturen mit höherer Genauigkeit oder verbesserter Robustheit erkannt werden. Insbesondere können Erfahrungen aus Messdaten von Sensoren, die die Fahrzeugkontur erst während der Behandlung erfassen, durch das Training eines KI-Systems auch schon vor dem Start eines Behandlungsvorgangs eingesetzt werden.

Ein weiterer Vorteil der kamerabasierten Fahrzeugkonturerfassung ist, dass mehrere Kameras aus unterschiedlichen Perspektiven auf dasselbe Fahrzeug gerichtet werden können. Die mehreren Kamerabilder aus unterschiedlichen Perspektiven können insbesondere miteinander kombiniert werden, um eine vollständigere Kenntnis über die Fahrzeugform zu erhalten, als sie aus einem einzelnen Bild hervorgeht. In einer besonders vorteilhaften Ausführung kann das Fahrzeug beispielsweise von der linken und der rechten Seite aufgenommen werden, wobei hierdurch die jeweiligen Seitenkonturen präziser erfasst werden können. Die mehreren Kamerabilder können insbesondere zu einer gemeinsamen Abbildung des Fahrzeug fusioniert werden und/oder zur Berechnung eines gemeinsamen Fahrzeugmodells verwendet werden.

In den bevorzugten Ausführungsformen der Erfindung kommen ein oder mehrere KI-Systeme zum Einsatz. Die KI-Systeme sind vorzugsweise trainierbare Abbildungsfunktionen, die Eingangsdaten auf eine bestimmte Art von Ausgangsdaten abbilden. Vorzugsweise werden Systeme bzw. Verfahren zum überwachten maschinellen Lernen eingesetzt. Vorzugsweise wird mindestens ein auf die Anwendung im erfindungsgemäßen Verfahren trainiertes künstliches neuronales Netz eingesetzt. Die KI-Systeme sind besonders geeigneten komplexe Informationen und/oder semantische Zusammenhänge in Datensammlung wie Kamerabildern zu ermitteln, die mit deterministischen Algorithmen zur schwer zu erfassen sind.

Für die Erfindung wird vorzugsweise mindestens ein KI-System zu einem der folgenden technischen Einsatzzwecke eingesetzt: Die Erkennung von Fahrzeugkonturen und/oder Bildkonturen und/oder Bildteilkonturen in einem Kamerabild, die Segmentierung eines Kamerabilds zur Ermittlung eines Fahrzeugbildsegments und/oder die Schätzung der Bildtiefe in einem Kamerabild. Die KI-Systeme können insbesondere für den jeweiligen Einsatzzweck (vor-)trainiert sein und/oder für den jeweiligen Einsatzzweck nachtrainiert werden. Insbesondere können vorbekannte und bereits trainierte KI-Systeme, z.B. Tiefenschätzer, auf den besonderen Einsatzbereich in einer Fahrzeugbehandlungsanlage nachtrainiert (d.h. optimiert) werden.

Ein erster Aspekt der Offenbarung ist ein computerimplementiertes Verfahren zur Ermittlung einer Fahrzeugkontur eines zu behandelnden Fahrzeugs in einer Fahrzeugbehandlungsanlage. Dieses Verfahren wird vorzugsweise im Betrieb einer Fahrzeugbehandlungsanlage vor Beginn eines Behandlungsprogramms durchgeführt, bspw. durch ein Konturerkennungssystem.

Ein zu behandelndes Fahrzeug in einer Fahrzeugbehandlungsanlage im Sinne dieser Offenbarung bedeutet, dass sich das Fahrzeug in oder an einer Fahrzeugbehandlungsanlage befindet. Das Fahrzeug kann sich bei der Aufnahme der Kamerabilder insbesondere bereits in der Behandlungsposition befinden. Alternativ oder zusätzlich kann das Fahrzeug in einem Einfahrtsbereich oder einer Zufahrt zur Fahrzeugbehandlungsanlage aufgenommen werden.

In einer möglichen Ausführungsform wird das Fahrzeug in einem Einfahrtsbereich der Fahrzeugbehandlungsanlage aufgenommen, um eine Fahrzeugkontur zu ermitteln. Der Ortsbezug der Fahrzeugkontur kann einmalig hergestellt werden (z.B. für eine Portalwaschanlage mit stehendem Fahrzeug) und/oder kontinuierlich (z.B. bei einer Waschstraße mit geschlepptem Fahrzeug) hergestellt werden. Der Ortsbezug kann insbesondere auch wiederhergestellt werden, wenn sich das Fahrzeug (unerwartet) bewegt.

In einer besonders vorteilhaften Ausführungsform wird die Veränderung der Position und/oder der Ausrichtung, d.h. die Bewegung, des Fahrzeugs erfasst. Die Erfassung der Bewegung des Fahrzeugs kann auf Basis einer oder mehrerer ortsbezogener Fahrzeugkonturen erfolgen. In Abhängigkeit der Art und/oder des Zustands der Fahrzeugbehandlungsanlage kann aus der Bewegung des Fahrzeugs auch ein kritischer Zustand festgestellt werden.

Zur Herstellung des Ortsbezug kann insbesondere eines der hier offenbarten Verfahren mit mindestens einer kalibrierten Kamera und/oder zusätzliche Sensorik zur Lokalisierung des Fahrzeugs (z.B. Lichtschranken, Abstandssensoren, etc.) eingesetzt werden.

In einer besonders günstigen Ausführungsform werden zweidimensionale Kamerabilder ausgewertet. Bildpunkte aus einem zweidimensionalen Kamerabild einer zur Umgebung kalibrierten Kamera lassen sich durch Hinzunahme einer zusätzlichen Ortsinformation in eine bestimmte dreidimensionale Position in einem ortsbezogenen Koordinatensystem transformieren. Das bedeutet, dass zu einem bestimmten Bildpunkt mit einer zusätzlichen Ortsinformationen die tatsächliche Raumposition des Bildpunkts in der Fahrzeugbehandlungsanlage ermittelt werden kann. Die Offenbarung macht zur Ermittlung der räumlichen Fahrzeugkonturen aus im Kamerabild erkannten Bildkonturen mehrere Vorschläge, die für die Anwendung in Fahrzeugbehandlungsanlagen besonders geeignet sind.

Mit dem computerimplementierten Verfahren kann insbesondere eine ortsbezogene Fahrzeugkontur erkannt und der Fahrzeugbehandlungsanlage zur Verfügung gestellt werden. Eine ortsbezogene Fahrzeugkontur kann dazu genutzt werden, um bspw. eine Bahn, eine Zustellbewegung oder einen Anstellwinkel für eine Behandlungsaggregat zu planen oder zu optimieren.

Eine ortsbezogene Fahrzeugkontur ist zu einem bestimmten Ort der Fahrzeugbehandlungsanlage lokalisierbar. Die ortsbezogene Fahrzeugkontur ist mit mindestens einer Position und/oder einer Orientierung in einem anlagenbezogenen Koordinatensystem beschreibbar. Die ortsbezogene Fahrzeugkontur kann z.B. in Bezug auf ein Weltkoordinatensystem oder ein zur Umgebung festes oder bewegtes Anlagenkoordinatensystem beschrieben werden. Die Ermittlung einer ortsbezogenen Fahrzeugkontur durch das hier offenbarte Verfahren ist besonders vorteilhaft für den Einsatz in einer Portalwaschanlage. In einer Waschstraße kann es auch zielführend sein, eine Fahrzeugkontur ohne Ortsbezug zu ermitteln und der Anlage bereitzustellen, wenn die Position des Fahrzeugs auf andere Weise, z.B. durch die Position der Schleppkette, ermittelbar ist.

Der Ortsbezug kann insbesondere durch kalibrierte Kameraparameter, die die Anordnung und den Blickwinkel der Kamera berücksichtigen (extrinsische Kamerakalibrierung), hergestellt werden. Die Umrechnung (Transformation) einer bildbezogenen Fahrzeugkontur in eine ortsbezogene Fahrzeugkontur kann bereits während des beanspruchten Verfahrens oder auch im Anschluss, bspw. durch ein Steuerungsverfahren der Anlage erfolgen.

In einer vorteilhaften Ausführungsform wird das Kamerabild des Fahrzeugs zur Ermittlung einer ortsbezogenen Fahrzeugkontur direkt in der finalen Behandlungsposition des Fahrzeugs aufgenommen. Alternativ oder zusätzlich kann das Fahrzeug auch vor dem Erreichen der Behandlungsposition, z.B. in der Einfahrt, aufgenommen werden. Der Ortsbezug der Fahrzeugkontur kann insbesondere auch nachträglich ermittelt werden, z.B. durch eine Lokalisierung der Fahrzeugkontur durch nachträgliche Positionsmessungen.

Es wird mindestens ein Kamerabild bezogen. Vorzugsweise werden mehrere Kamerabilder verschiedener Kameras in unterschiedlichen Positionen und/oder aus unterschiedlichen Blickwinkeln bezogen. Das Kamerabild kann direkt von einer Kamera bezogen werden. Das Kamerabild kann auch vor oder während des Verfahrens einer Bildvorverarbeitung unterzogen werden. Vorzugsweise wird durch eine Bildvorverarbeitung die Wölbung und/oder Verzerrung im Kamerabild entfernt. Zur Entzerrung und/oder Entfernung der Wölbung des Kamerabilds werden vorzugsweise vorbekannte (intrinsische) Kameraparameter aus einer Kamerakalibrierung genutzt.

Das Kamerabild kann insbesondere in eine andere Perspektive umgerechnet werden, z.B. in eine Vogelperspektive. Für die Umrechnung bzw. Transformation sind dem Fachmann verschiedene Verfahren bekannt. Die hier offenbarte Technik und die einzelnen Merkmale darin können sowohl auf ein Kamerabild in dessen ursprünglichen Perspektive als auch auf ein transformiertes Kamerabild angewendet werden.

In dem mindestens einen Kamerabild ist das zu behandelnde Fahrzeug in der Fahrzeugbehandlungsanlage abgebildet. Das Kamerabild zeigt in der Regel den der Kamera zugewandten Teil des Fahrzeugs vor einem Hintergrund der Fahrzeugbehandlungsanlage. Dieses Kamerabild ist in der Regel gut geeignet, um Fahrzeugkonturen auf der der Kamera zugewandten Seite des Fahrzeugs zu erkennen.

Vorteilhafterweise werden mehrere Kamerabilder zur Erfassung mehrerer Fahrzeugkonturen verarbeitet. Besonders vorteilhaft ist die Verarbeitung mehrerer Kamerabilder derselben Fahrzeugpartie zur Plausibilisierung und/oder Optimierung der erkannten Fahrzeugkontur.

In einer vorteilhaften Ausführungsform kann zusätzlich auch ein Kamerabild derselben Szene ohne Fahrzeug einbezogen werden, um ein Differenzbild zu berechnen. Auf diese Weise lässt sich im Differenzbild erkennen, welche Bildbereiche mit hoher Wahrscheinlichkeit das Fahrzeug zeigen. Dies ist insbesondere zur Segmentierung des Kamerabilds vorteilhaft.

Aus dem Kamerabild wird mindestens eine Fahrzeugkontur des zu behandelnden Fahrzeugs ermittelt. Das Kamerabild umfasst in der Regel eine zweidimensionale Matrix aus Bildpunkten (Pixel). Der Ort eines Bildpunktes lässt sich innerhalb des Bildes in einem Bildkoordinatensystem beschreiben. Zu jedem Bildpunkt können eine oder mehrere Bildwerte vorliegen (bspw. Helligkeit, Farbwerte oder auch Tiefenwerte). Das Kamerabild kann je nach Ausführungsform in Graustufen oder als Farbbild verarbeitet werden.

Die Fahrzeugkontur kann vorerst in Bildkoordinaten ermittelt werden und anschließen in ein ortsbezogenes Koordinatensystem umgerechnet werden. Das Kamerabild kann alternativ oder zusätzlich auch zuerst in ein ortsbezogenes Koordinatensystem (z.B. ein ortsfestes Weltkoordinatensystem oder ein bewegtes Anlagenkoordinatensystem) umgerechnet werden, wodurch die ermittelte Fahrzeugkontur einen unmittelbaren Ortsbezug hat. Alternativ oder zusätzlich können auch ein oder mehrere Kamerabilder (ggfs. als Zwischenschritt) in ein weiteres Bildkoordinatensystem umgerechnet bzw. fusioniert werden, bspw. in eine gemeinsame Vogelperspektive. In der vorliegenden Offenbarung kann der Begriff Kamerabild daher sowohl als Rohbild, vorverarbeitetes Bild oder auch transformiertes Bild verstanden werden.

Die Ermittlung der Fahrzeugkontur kann je nach Ausführungsform in einem oder mehreren Schritten und auf mehreren Wegen erfolgen.

In einer besonders vorteilhaften Ausführungsform erkennt ein trainiertes KI-System, vorzugsweise ein künstliches neuronales Netz, direkt eine Fahrzeugkontur im Kamerabild.

Alternativ oder zusätzlich kann das mindestens eine Kamerabild segmentiert werden, vorzugsweise in ein Hintergrundsegment und ein Fahrzeugbildsegment. Die Fahrzeugkontur kann insbesondere als Grenzkontur einer Fläche, einer Punktemenge oder eines Bildsegments berechnet werden.

Die Fahrzeugkontur wird über eine Anlagenschnittstelle der Fahrzeugbehandlungsanlage bereitgestellt. Je nach Systemarchitektur der Anlage bzw. des Konturerkennungssystems kann die Bereitstellung auf mehrere Arten erfolgen. Vorzugsweise ist die Konturerkennung als Dienst (Service) ausgebildet. Bei einem Dienst kann eine interne oder externe Instanz (z.B. die Anlagensteuerung) eine Fahrzeugkontur durch eine Anfrage anfordern. Der Dienst meldet anschließend eine Fahrzeugkontur als an die anfragende Instanz zurück. Alternativ oder zusätzlich kann die Fahrzeugkontur auch als Nachricht gesendet oder zum Abruf bereitgestellt werden.

Die Fahrzeugkontur kann vorteilhafterweise als geometrische Funktion bereitgestellt werden, das effizient zur Bahnplanung, Abstandberechnung oder anderen Operation der Anlagensteuerung verwendet werden kann. Vorteilhaft ist beispielsweise eine Annäherung der ermittelten Fahrzeugkontur durch eine polynomiale Funktionen, vorzugsweise Splines. Solche geometrischen Funktionen lassen sich besonders effizient verarbeiten, z.B. bei der Berechnung des Abstands eines Punktes zum nächstgelegenen Punkt auf der Fahrzeugkontur.

Die Konturerkennung kann sowohl in der Anlagensteuerung integriert als auch in einer separaten Datenverarbeitungseinheit ausgeführt werden. Die Anlagenschnittstelle kann entsprechend eine interne (Software-)Schnittstelle sein oder auch eine externe Schnittstelle. Die Anlagenschnittstelle kann insbesondere über ein BUS-Netzwerk ausgebildet werden, in der die Anlagensteuerung und das Konturerkennungssystem eingebunden sind.

Vorteilhafterweise wird das Kamerabild in mehrere Bildsegmente segmentiert. Teile des Kamerabildes, die das Fahrzeug abbilden, werden vorzugsweise einem Fahrzeugbildsegment zugeordnet. Bei der Segmentierung können auch weitere Bildsegmente erzeugt werden. Ein Bildsegment ist eine Teil eines Bildes, beispielsweise eine Menge von Bildpunkten, die einen bestimmten Bildbereich beschreiben. Vorzugsweise ist das Fahrzeugbildsegment ein in sich zusammenhängendes Bildsegment. Das Fahrzeugbildsegment trennt vorteilhafterweise den Hintergrund und/oder andere Bildbestandteile (z.B. Gegenstände in der Anlage) vom Fahrzeug.

Durch die Segmentierung kann ein Computer feststellen, welche Teile des Bildes bzw. welche Datenpunkte das Fahrzeug betreffen. Die Segmentierung ermöglicht außerdem eine präzise Berechnung oder Erkennung von Rändern der Abbildung des Fahrzeugs, d.h. der Bildkonturen.

Es existieren verschiedene Verfahren zur Segmentierung von Bildern. Besonders vorteilhaft ist der Einsatz einer semantischen Segmentierung, vorzugsweise durch ein trainiertes KI-System, bspw. ein künstliches neuronales Netz.

Die Segmentierung, d.h. die Ermittlung des Fahrzeugbildsegments, ermöglicht gegenüber anderen bekannten Verfahren der Bildverarbeitung, z.B. der Objekterkennung oder der Objektklassifikation, eine wesentlich höhere Präzision bei der Erkennung und Lokalisierung von Konturen.

In einer möglichen Ausführungsform wird in einem ersten Schritt eine Bildkontur im Kamerabild oder an einem bereits segmentierten Fahrzeugbildsegment ermittelt. Die Bildkontur kann in einem oder mehreren Schritten in eine (ortsbezogene) Fahrzeugkontur überführt werden. Insbesondere kann zuerst eine Bildkontur in Bildkoordinaten ermittelt werden. Die Bildkontur kann je nach Ausführungsform mit weiteren Bildinformationen oder weiteren Bildkonturen aus anderen Kamerabildern kombiniert und/oder auf Plausibilität geprüft und/oder korrigiert werden. Die Bildkontur kann in ein ortsbezogenes Koordinatensystem transformiert werden, um eine ortsbezogene Fahrzeugkontur abzubilden.

Die Bildkontur kann insbesondere eine optisch erkennbare Linie in der Fahrzeugoberfläche sein. Die Bildkontur kann sowohl in der natürlichen Form des Fahrzeugs vorhanden sein als auch durch die Fahrzeugbehandlungsanlage bzw. das Konturerkennungssystem auf der Fahrzeugoberfläche erzeugt worden sein (z.B. durch projizierte Lichtlinien, mit einem Laser).

Eine Bildkontur kann insbesondere einen vollständigen Umriss eines Objekts in einem Bild oder eines Bildsegments oder auch nur einen teilweisen Umriss abbilden. Besonders vorteilhaft ist die Ermittlung Bildteilkonturen. Eine besonders nützliche Bildteilkontur ist beispielsweise die Bildkontur des Fahrzeugs in der Nähe der Bodenfläche oder einer anderen Referenzebene. Auch in einem zweidimensionalen Bild können Bildpunkte, deren reale Lage im Raum nahe einer Referenzebene liegen, mit geringen Verzerrungen in eine Referenzebene (z.B. Vogelperspektive auf die Bodenebene) projiziert werden. Je nach Perspektive der Kamera für ein bestimmtes Kamerabild ist es daher vorteilhaft Bildteilkonturen in einem bestimmten Bereich des Bildes (z.B. der unteren Bildhälfte) zu ermitteln.

Eine Bildkontur kann eine erkennbare Kontur sein, die sich beispielswiese durch einen Kontrast, im Bild durch geeignete Bildverarbeitungsalgorithmen bestimmen lässt. In der Regel können mehrere mögliche Bildkonturen in einem Kamerabild erkannt werden. Durch Anwendung einer Heuristik oder einer vorbekannten a priori Information lässt sich eine Bildkontur einem tatsächlichen Element des Fahrzeugs zuordnen. Beispielsweise kann davon ausgegangen werden, dass der untere Rand des Fahrzeugbildsegments in der Nähe der Bodenebene liegt.

In einer besonders vorteilhaften Ausführung der Erfindung können bestimmte durch Kameras erkennbare Konturen auf der Fahrzeugoberfläche erzeugt werden, zu denen durch die gezielte Erzeugung zusätzliche Informationen bereit stehen. Beispielsweise können Lichtlinien oder Schaumgrenzlinien an bestimmten teilweise bekannten Stellen im Raum erzeugt werden, die wiederum im Kamerabild des Fahrzeugs erkennbar sind. Durch Kombination der teilvorbekannten Lage der Bildkontur und der im Bild ermittelbaren Lage der Bildkontur, kann die Kontur der Fahrzeugoberfläche computergestützt ermittelt werden.

Eine besonders vorteilhafte Ausführung besteht in der Erzeugung von Bildkonturen in einer vorbestimmten oder durch Einstellung bekannten Referenzebene in der Fahrzeugbehandlungsanlage, die das Fahrzeug schneidet. Durch Projizieren oder Auftragen einer erkennbaren Kontur auf der Fahrzeugoberfläche in einer vorbestimmten Ebene wird die Schnittlinie der Fahrzeugoberfläche mit dieser Ebene im Bild sichtbar und auswertbar.

Durch Kombination von Lageinformationen der eigens erzeugten Bildkontur mit Informationen aus der Bildverarbeitung lassen sich mit einfachen und günstigen Kameras dreidimensionale Rauminformationen der komplexen Fahrzeugoberfläche computergestützt ermitteln.

In besonders vorteilhaften Ausführungsformen werden Tiefeninformationen zu Kamerabildern erfasst. Tiefeninformationen beschreiben einen Abstand eines in einem Kamerabild abgebildeten Objekts oder Punktes zur Kamera. Mit einer Tiefeninformation kann einem zweidimensionalen Bild eine dritte Dimension hinzugefügt werden. Mit einer Tiefeninformation lässt sich insbesondere ein Bildpunkt eindeutig in einen ortsbezogenen Punkt im Raum transformieren. Alternativ oder zusätzlich können aus einem zweidimensionalen Bild auch durch Annahmen (z.B. Lage eines Punktes in einer bestimmten Ebene) Rückschlüsse auf die Lage des abgebildeten Punktes im Raum treffen.

Die Tiefeninformationen können insbesondere von einer Stereokamera, einem Time-of-Flight-Sensor oder einem trainierbaren Tiefenschätzer bezogen werden. Je nach Ausführungsform wird die Tiefeninformation als weitere Bildinformation zu den Bildpunkten des Kamerabildes hinzugefügt oder unmittelbar als Teil des Kamerabildes (z.B. von einer Stereokamera oder einer Bildvorverarbeitung) bezogen.

Bevorzugt werden Tiefeninformationen zu Bildpunkten durch einen trainierten Tiefenschätzer ermittelt. Der Tiefenschätzer kann insbesondere durch bestärkendes Training auf die jeweilige Erkennungssituation, insbesondere die Perspektive der Kamera in der Fahrzeugbehandlungsanlage, optimiert sein.

Der Tiefenschätzer kann insbesondere durch Fahrzeugmodelldaten (z.B. einem CAD-Modell für einen bestimmten Fahrzeugtyp des jeweiligen Fahrzeugherstellers) optimiert werden.

In einer besonders vorteilhaften Ausführungsform wird aus einem oder mehreren Kamerabildern ein dreidimensionales Fahrzeugmodell erzeugt.

Das dreidimensionale Fahrzeugmodell ist vorzugsweise ein ortsbezogenes Modell, das im Raum eindeutig lokalisierbar ist. Das dreidimensionale Fahrzeugmodell kann insbesondere als dreidimensionale Punktemenge abgebildet werden. Aus dem dreidimensionalen Fahrzeugmodell lassen sich insbesondere zwei- oder dreidimensionale Fahrzeugkonturen ableiten.

Bei der Berechnung des dreidimensionalen Fahrzeugmodells können insbesondere Informationen aus mehreren Kamerabildern zusammengeführt werden. Beispielsweise können in einem gemeinsamen Fahrzeugmodell Kamerabilder der linken und der rechten Fahrzeugseite zusammengeführt werden.

In einer vorteilhaften Ausführungsform wird eine Fahrzeugkontur durch Projektion eines Fahrzeugmodells auf eine bestimmte Referenzebene ermittelt. Beispielsweise kann ein Fahrzeugmodell auf eine horizontale Bodenebene projiziert werden, um daraus die Seitenkonturen des Fahrzeugs zu ermitteln.

In einer besonders vorteilhaften Ausführungsform der Erfindung wird das Konturerkennungsverfahren bzw. das Konturerkennungssystem während des Betriebs mit weiteren Sensordaten (z.B. von Abstandssensoren der Anlage) nachtrainiert und/oder optimiert. Alternativ oder zusätzlich können auch während der Durchführung des Konturerkennungsverfahrens Daten für das Training eines trainierbaren Konturerkennungssystems gesammelt und/oder aufbereitet werden.

Ein weiterer Aspekt der Offenbarung ist ein Datensammelverfahren zur Sammlung von Trainingsdaten für ein trainierbares Konturerkennungssystem für eines Fahrzeugbehandlungsanlage.

Unter Training versteht die vorliegende Offenbarung das maschinelle Lernen eines KI-Systems. Dem Fachmann sind verschiedene trainierbare Systeme, z.B. künstliche neuronale Netze oder Support Vector Machines, und Trainingstechniken (z.B. überwachtes Lernen und bestärkendes Lernen) bekannt. Je nach trainierbarem System stehen dem Fachmann verschiedene Trainingsmethoden zur Verfügung. Für den erfindungsgemäßen Einsatz sind insbesondere sog. überwachte Trainingsverfahren geeignet, bei denen das System durch Vorgabe von zuvor mit dem zu trainierenden Wissen versehenen Ein- und Ausgabedaten trainiert wird. Das trainierbare Konturerkennungssystem hat die Aufgabe aus einem oder mehreren Kamerabildern eine Fahrzeugkontur zu erkennen oder einen Zwischenschritt der Erkennung auszuführen.

Vorzugsweise erhält das KI-System als Eingangsdaten Kamerabilder. Als Ausgangsdaten gibt das System eine Fahrzeugkontur, eine Bildkontur, eine Bildteilkontur, ein Bildsegment, insbesondere ein Fahrzeugbildsegment, oder Tiefeninformationen aus.

Insbesondere für die Ausgabe einer Fahrzeugkontur kann das System mit händisch oder maschinell aufbereiteten Trainingsdaten trainiert werden, die bereits eine korrekte Zuordnung einer Fahrzeugkontur zu einem Kamerabild enthalten. Zur maschinellen Erzeugung solcher Trainingsdaten ist das hier offenbarte Datensammelverfahren besonders geeignet.

In einer oder mehreren Fahrzeugbehandlungsanlagen werden Kamerabilder der zu behandelnden Fahrzeuge aufgenommen. Dabei ist es zielführend die Fahrzeuge in derselben oder einer ähnlichen Perspektive aufzunehmen, in der auch die Kamerabilder des trainierten Konturerkennungsverfahrens aufgenommen werden.

Zu einem aufgenommenen Kamerabild werden zugehörige Daten über eine oder mehrere Fahrzeugkonturen des aufgenommenen Fahrzeugs gesammelt. Vorzugsweise werden diese Daten von Sensoren der Fahrzeugbehandlungsanlage bezogen. Alternativ oder zusätzlich können auch zusätzliche Sensoren, z.B. Laserscanner oder Abstandssensoren, eingesetzt werden, um Daten über die Fahrzeugkontur zu erfassen.

Aus den erfassten Sensorsignalen ist direkt oder indirekt eine Fahrzeugkontur ableitbar. Die erfassten Daten enthalten zumindest eine Information (z.B. einen oder mehrere Punkte im Raum oder Abstände zur Anlage in einer bestimmten Behandlungsposition), die zur Ermittlung einer Fahrzeugkontur genutzt werden können.

In einer vorteilhaften Ausführungsform können Daten eines Lichtgitters der Fahrzeugbehandlungsanlage gespeichert werden, um Daten über die Fahrzeugform und/oder eine Fahrzeugkontur zu erfassen.

Das mindestens eine Kamerabild wird in Verknüpfung mit den zu dem aufgenommenen Fahrzeug erfassten Sensorsignalen und/oder daraus abgeleiteten Daten gespeichert. Dieser Datensatz enthält vorzugsweise bereits geeignete Eingangsdaten (z.B. Kamerabild) und Ausgangsdaten (z.B. Fahrzeugkontur, Bildkontur, Bildteilkontur, Fahrzeugbildsegment oder Tiefeninformationen) für das Training eines KI-Systems.

Ein weiterer Aspekt der Offenbarung ist ein Trainingsverfahren zum Training eines trainierbaren KI-Systems für den Einsatz bei der Erkennung einer Fahrzeugkontur in einer Fahrzeugbehandlungsanlage.

Das Trainingsverfahren kann insbesondere für die Herstellung eines Konturkennungssystems zur Erkennung mindestens einer Fahrzeugkontur eines Fahrzeugs in einer Fahrzeugbehandlungsanlage eingesetzt werden. Es wird ein KI-System, vorzugsweise ein künstliches neuronales Netz, mit Trainingsdaten trainiert. Die Trainingsdaten sind speziell für den Einsatzzweck geeignet und/oder aufbereitet.

Die Trainingsdaten umfassen eine Menge an Kamerabildern von Fahrzeugen in einer Fahrzeugbehandlungsanlage. Die Kamerabilder dienen als Eingangsdaten für das KI-System. Zu jedem Kamerabild enthält der Trainingsdatensatz zumindest einen zugehörigen Ausgangsdatensatz. Der Ausgangsdatensatz umfasst vorzugsweise eine Fahrzeugkontur, und/oder eine Bildkontur und/oder eine Bildteilkontur und/oder ein Fahrzeugbildsegment und/oder Tiefeninformationen. Vorzugsweise umfassen die Trainingsdaten eine Vielzahl von Datensätzen aus einem oder mehreren Datensammelverfahren und/oder einer manuellen Datenvorverarbeitung. Das Trainingsverfahren ist insbesondere dazu geeignet ein KI-System zur Konturerkennung, zur Segmentierung und/oder zur Tiefenschätzung in einem Kamerabild eines Fahrzeugs in einer Fahrzeugbehandlungsanlage zu trainieren.

Ein weiterer Aspekt der Offenbarung ist ein Konturerkennungssystem. Das Konturerkennungssystem ist eine Vorrichtung zur Erkennung mindestens einer Fahrzeugkontur eines zu behandelnden Fahrzeugs in einer Fahrzeugbehandlungsanlage.

Das Konturerkennungssystem umfasst eine Datenverarbeitungseinheit und mindestens eine Kamera. Alternativ oder zusätzlich kann das Konturerkennungssystem auch eine Schnittstelle zu einer oder mehreren Kameras haben. Die Datenverarbeitungseinheit umfasst vorzugsweise mindestens einen Computer, der zur Bildverarbeitung geeignet ist. Vorzugsweise umfasst die Datenverarbeitungseinheit mindestens eine Bildverarbeitungseinheit. Die Bildverarbeitungseinheiten können insbesondere für einzelne (Vor-)Verarbeitungsschritte der Kamerabilder zur Erkennung einer Fahrzeugkontur ausgebildet sein. Die Bildverarbeitungseinheit kann als Hardware- und/oder Softwaremodul ausgebildet sein.

Das Konturerkennungssystem, insbesondere die Bildverarbeitungseinheit, umfasst vorzugsweise mindestens ein KI-System. Das KI-System ist vorzugsweise ein auf den Zweck der Fahrzeugkonturerkennung in einer Fahrzeugbehandlungsanlage trainiertes künstliches neuronales Netz.

Das mindestens eine KI-System kann dazu ausgebildet sein, ein Fahrzeugsegment in einem Kamerabild zu ermitteln. Vorzugsweise ist das KI-System dazu trainiert eine Segmentierung in einem (ggfs. vorverarbeiteten) Kamerabild in einer bestimmten Perspektive auf die Fahrzeugbehandlungsanlage auszuführen.

Das mindestens eine KI-System kann alternativ oder zusätzlich dazu ausgebildet sein, eine Bildkontur und/oder eine Bildteilkontur an einem Fahrzeug in einem Kamerabild zu ermitteln. Vorzugsweise ist das KI-System darauf trainiert, eine bestimmte (Teil-)Kontur am Fahrzeug, beispielsweise die Seitenkontur an einer unteren Bildhälfte des Fahrzeugsegments zu ermitteln.

Das mindestens eine KI-System kann alternativ oder zusätzlich dazu ausgebildet sein, Tiefeninformationen in einem Kamerabild zu schätzen. Die Tiefeninformation kann für das gesamte Kamerabild und/oder einen bestimmten Bereich, bspw. das Fahrzeugbildsegment, ermittelt werden. Das KI-System ist vorzugsweise darauf trainiert die dreidimensionale Form des Fahrzeugs aus einer bestimmten Perspektive zu schätzen. Die Tiefeninformationen können für bestimmte Bildpunkte (Pixel) und/oder Bildbereiche ermittelt werden.

Aus den Tiefeninformationen kann, insbesondere mittels vor- oder nachgelagerter Segmentierung des Fahrzeugbildsegments, ein dreidimensionales Fahrzeugmodell berechnet werden.

In einer besonders vorteilhaften Ausführungsform umfasst das Konturerkennungssystem eine Modellierungseinheit, die dazu ausgebildet ist ein dreidimensionales Modell des Fahrzeugs zu berechnen.

Das Konturerkennungssystem umfasst vorzugsweise eine Anlagenschnittstelle für den Datenaustausch mit einer Fahrzeugbehandlungsanlage. Vorzugsweise ist die Anlagenschnittstelle dazu ausgebildet, einen Fahrzeugkonturerkennungsdienst bereitzustellen.

Ein weiterer Aspekt der Offenbarung ist eine Fahrzeugbehandlungsanlage mit einem Konturerkennungssystem. Auch die gesamte Fahrzeugbehandlungsanlage ist Gegenstand dieser Offenbarung. Die Fahrzeugbehandlungsanlage umfasst vorzugsweise mindestens eine Kamera. Die mindestens eine Kamera kann insbesondere an einem fahrbaren Behandlungsportal der Anlage angeordnet sein. Alternativ oder zusätzlich kann die Anlage mindestens eine Kamera an einem ortsfesten Teil der Fahrzeugbehandlungsanlage, z.B. der Hallenwand, einem Pfosten oder an einem Teil der Einfahrt umfassen. Alternativ oder zusätzlich können auch Signale einer bereits vorhandenen Überwachungskamera in das System eingebunden werden.

In einer besonders vorteilhaften Ausführungsform ist mindestens eine Kamera oberhalb und/oder gegenüber der Parkposition des zu behandelnden Fahrzeugs zur Seite hin versetzt angeordnet. Besonders vorteilhaft ist die Anordnung von zwei oder mehr Kameras, die das Fahrzeug aus einer schrägen Perspektive von links bzw. rechts oben aufnehmen.

Speziell zur Erfassung der Seitenkontur(en) und/oder der Höhenkontur(en) des Fahrzeugs ist eine Kombination aus mehreren Aufnahmen des Fahrzeugs aus verschiedenen Perspektiven, insbesondere zwei Seiten (links und rechts) und/oder aus einer höheren Position über dem Fahrzeug sowie auch von einer seitlichen Position neben dem Fahrzeug vorteilhaft.

Weitere Aspekte dieser Offenbarung bestehen in der Verwendung der ermittelten Fahrzeugkontur. Die Merkmale dieser Aspekte sind sowohl im Zusammenhang der beanspruchten Verfahren und Vorrichtungen zur Ermittlung einer Fahrzeugkontur als auch unabhängig von diesen offenbart. Insbesondere kann die Fahrzeugkontur mit einem Verfahren bzw. einer Vorrichtung mit den folgenden Merkmalen vorteilhaft verarbeitet werden.

Aus einer oder mehreren erkannten ortsbezogenen Fahrzeugkonturen kann insbesondere eine Bewegung des Fahrzeugs erkannt werden. Die Bewegung des Fahrzeugs kann insbesondere mit einem Zustand der Anlage und/oder einem Zustand des Behandlungsvorgangs in Verbindung gebracht werden.

Wird eine Bewegung des Fahrzeugs erkannt, kann in Abhängigkeit des Zustand der Fahrzeugbehandlungsanlage und/oder des Behandlungsprogramms unterschiedlich reagiert werden.

Beispielsweise ist eine Bewegung des Fahrzeugs vor Beginn der Behandlung während der Einfahrt des Fahrzeugs in die Anlage zu erwarten und unkritisch. Hat das Fahrzeug jedoch schon seine Behandlungsposition erreicht, soll es ich je nach Anlagenart in der Regel nicht mehr oder nur in einer bestimmten Art und Weise bewegen. In Abhängigkeit der Art der Anlage kann entsprechend ein bewegungskritischer oder ein bewegungsunkritischer Zustand der Anlage ermittelt werden oder vorgegeben sein.

In einer vorteilhaften Ausführungsform kann durch Ermittlung der Fahrzeugbewegung eine unerwartete oder sicherheitskritische Bewegung erkannt werden, wenn sich das Fahrzeug bspw. während des Behandlungsprogramms in einer Portalwaschanlage bewegt, obwohl es stillstehen sollte, oder sich das Fahrzeug in einer Waschstraße nicht oder zu schnell bewegt, obwohl es vom Schleppantrieb geführt werden sollte. Hierdurch kann z.B. erkannt werden, ob der Fahrer in der Portalwaschanlage vergessen hat die Bremse zu betätigen oder in einer Waschstraße die Bremse nicht gelöst wurde. Auf diese Weise kann auch erkannt werden, wenn der Fahrer unerwartet losfährt.

Die Ermittlung einer ortsbezogenen Fahrzeugkontur kann auch zur Ermittlung der Position bewegter Teile der Fahrzeugbehandlungsanlage verwendet werden. Insbesondere kann die Position eines beweglichen Behandlungsportals und/oder eines einzelnen Behandlungsaggregats anhand einer ortsbezogenen Fahrzeugkontur ermittelt werden. Anhand einer bekannten ortsbezogenen Fahrzeugkontur lässt sich insbesondere Schlupf eines Antriebs und/oder Rutschen einer Fahrzeugbehandlungsanlage erkennen.

In einer besonders vorteilhaften Weiterbildung der Erfindung wird die erkannte Fahrzeugkontur genutzt, um dem Fahrer eine oder mehrere Handlungsempfehlungen oder Warnungen zu geben. Insbesondere kann die erkannte Fahrzeugkontur zur Ermittlung der folgenden Zustände und der Erzeugung der entsprechenden Anweisungen oder Warnungen genutzt werden. Die folgenden Aspekte können sowohl in Kombination miteinander als auch unabhängig voneinander eingesetzt werden.

Anhand einer ortsbezogenen Fahrzeugkontur wird eine Pose des Fahrzeugs ermittelt. Die Ausrichtung des Fahrzeugs wird ermittelt. Weicht die Fahrzeugposition, die Fahrzeugausrichtung und/oder die Fahrzeugpose von einem vorbestimmten Toleranzbereich ab, kann ein unzulässiger Zustand erkannt werden. Es kann insbesondere festgestellt werden, dass das zu behandelnde Fahrzeug zu schräg abgestellt ist. Der Fahrer kann über die unzulässige Fahrzeugposition informiert werden.

Die Fahrzeugposition wird anhand der ortsbezogenen Fahrzeugkontur ermittelt. Die Fahrzeugposition wird mit einer Soll-Position verglichen. Es werden Fahrempfehlungen (z.B. Empfehlung zur Lenkung, zum Vorfahren oder zum Zurücksetzen des Fahrzeugs) erzeugt und dem Fahrer angezeigt und/oder mitgeteilt.

Aus einer oder mehreren Fahrzeugkonturen werden Abmessungen des zu behandelnden Fahrzeugs ermittelt. Die Abmessungen des Fahrzeugs werden mit einem oder mehreren Maximalmaßen vergleichen. Bei Überschreiten einer oder mehrerer Maximalmaße wird ein unzulässiger Zustand erkannt. Dem Fahrer kann eine entsprechende Nachricht angezeigt oder mitgeteilt werden, dass die Abmessungen des Fahrzeugs für die Behandlung ungeeignet sind.

Es kann geprüft werden, ob die ermittelte Fahrzeugposition innerhalb eines oder mehreren zulässigen Bereichen innerhalb der Fahrzeugbehandlungsanlage liegt. Es kann insbesondere anhand der Fahrzeugkontur(en) festgestellt werden, ob ein Teil des Fahrzeugs über eine oder mehrere Bereichsgrenzen hinausragt. Es kann entsprechend eine Mitteilung erzeugt werden, dass das Fahrzeug in einer unzulässigen Position steht.

Erfindungsgemäß werden eine oder mehrere Fahrzeugkonturen genutzt, um bestimmte Teile des Fahrzeugs zu erfassen und/oder zu lokalisieren. Vorteilhafterweise können diese Fahrzeugteile in einem Behandlungsprogramm besonders berücksichtigt werden.

Mittels einer oder mehrerer (ortsbezogener) Fahrzeugkonturen können insbesondere die Position und/oder die Größe von Fahrzeugteilen (z.B. Räder, Spiegel, Seitenschweller, Scheiben, Scheibenwischer, Anhängerkupplung, Dachbox, Dachgepäckträger, Heckgepäckträger).

In einer besonders vorteilhaften Ausführungsform wird auch die Veränderung der Position eines Fahrzeugteils erkannt. Alternativ oder zusätzlich kann eine unerwartete Position eines Fahrzeugteils erkannt werden. Insbesondere kann das Öffnen einer Türe oder einer Kofferraumklappe erkannt werden.

Als besonders vorteilhafte Weiterbildung wird insbesondere ein computerimplementiertes Verfahren offenbart, bei dem eine oder mehrere Fahrzeugkonturen bezogen oder ermittelt werden. Vorteilhafterweise ist die Fahrzeugkontur ortsbezogen und/oder kamerabasiert ermittelt. Anhand der mindestens einen Fahrzeugkontur wird die Position und/oder die Orientierung des Fahrzeugs ermittelt. Alternativ oder zusätzlich kann die Bewegung des Fahrzeugs und/oder die Veränderung zwischen einer ersten ermittelten Position und einer oder mehreren weiteren ermittelten Positionen berechnet werden. Auch ein Stillstehen des Fahrzeugs kann in Bezug auf bestimmtes Bezugssystem als Bewegung betrachtet werden.

Wird eine Bewegung des Fahrzeugs festgestellt, wird vorzugsweise auch der Zustand der Fahrzeugbehandlungsanlage und/oder eines Behandlungsprogramms erfasst. Ist die Bewegung des Fahrzeugs unerwartet und/oder sicherheitskritisch, kann eine Sicherheitsaktion ausgelöst werden. Die Sicherheitsaktion kann eine Warnung, ein Eintrag in ein Fehlerlog, ein Nothalt der Anlage und/oder eine Anpassung des Behandlungsprogramms umfassen.

In einer besonders vorteilhaften Ausführungsform wird das Behandlungsprogramm an einer Veränderung der Position des Fahrzeugs angepasst. Beispielsweise kann die Geschwindigkeit des Behandlungsprogramms angepasst (bspw. verlangsamt) werden. Eine oder mehrere Bahnen eines Behandlungsaggregats können auch an eine Veränderung der Fahrzeugposition angepasst werden.

In einer vorteilhaften Ausführungsform wird anhand mindestens einer Fahrzeugkontur wird die Position und/oder die Größe eines bestimmten Fahrzeugteils ermittelt.

Die Position und/oder die Größe eines bestimmten Fahrzeugteils wird einer Anlagensteuerung über eine Anlagenschnittstelle bereitgestellt oder in die Berechnung eines Behandlungsprogramms einbezogen. Das Behandlungsprogramm wird vorzugsweise derart berechnet oder angepasst, dass bestimmte erkannte und/oder lokalisierte Fahrzeugteile (z.B. Räder, Scheiben) gezielt von einem Behandlungsaggregat angesteuert und/oder mehrfach behandelt werden.

Es wird insbesondere auch eine entsprechende Vorrichtung zur Durchführung der hier offenbarten Verfahrensmerkmale offenbart.

Die Merkmale der verschiedenen Aspekte der vorliegenden Offenbarung, insbesondere der Verfahren und Vorrichtungen, können separat und/oder in (Teil-)Kombinationen Gegenstand der Ansprüche sein. Es liegt im Wesen der zugrundeliegenden Technologie, dass das System zumindest teilweise verteilt ist und/oder Verfahrensschritte, die zwar einen funktionalen Zusammenhang aufweisen, von unterschiedlichen Instanzen und/oder zu unterschiedlichen Zeitpunkten ausgeführt werden. Insbesondere können die verschiedenen Verfahrensaspekte während der Betriebs und/oder der Entwicklung und/oder der Wartung einer Fahrzeugbehandlungsanlage eingesetzt werden.

Die hier offenbarten Merkmale sind insbesondere so zu verstehen, dass diese jeweils auch für die entsprechende Vorrichtung oder das entsprechende Verfahren offenbart sind und beansprucht werden können. Die Erfindungsmerkmale können insbesondere in einer Vielzahl von Ausführungsformen miteinander kombiniert werden. Die Offenbarung umfasst daher auch Ausführungsformen, in denen einzelne Merkmale miteinander kombiniert, ergänzt oder weggelassen werden.

Die Erfindung ist in den Zeichnungen beispielhaft und schematisch dargestellt.

### Liste der Figuren:

- Figur 1:: eine schematische Darstellung einer Fahrzeugbehandlungsanlage (10) mit einem Konturerkennungssystem (13) zur Erkennung zweier Fahrzeugkonturen (30).
- Figur 2:: ein Kamerabild (20) eines Fahrzeugs in einer Fahrzeugbehandlungsanlage sowie ein in eine Vogelperspektive transformiertes Kamerabild (40).
- Figur 3:: ein Kamerabild (20), zu dem Tiefeninformationen zu mehreren Bildpunkten (Pi) erfasst werden, sowie ein Fahrzeugbildsegment (25), das vom Hintergrund (21) aus dem Kamerabild segmentiert wurde, zu dem Tiefeninformationen (Di) erfasst werden.
- Figur 4:: ein dreidimensionales Fahrzeugmodell (50) und eine Ableitung mehrerer Fahrzeugkonturen (30) in mehreren Referenzebenen (E' , E", E"').
- Figur 5:: ein Fahrzeug (F), auf das Schaum (S) appliziert wird, wodurch eine kamerabasiert erkennbare Schaumgrenzlinie (27) in einer bekannten Referenzebene (E"") erzeugt wird.
- Figur 6:: ein Fahrzeug (F), auf das mit einer Projektionsvorrichtung (17) eine Lichtlinie (28) in einer bestimmten Ebene (E) projiziert wird.

Die Figuren dienen der Verdeutlichung der verschiedenen Aspekte der Offenbarung in einzelnen möglichen Ausführungsformen. Die Offenbarung ist nicht auf die in den Figuren dargestellten Merkmalskombinationen beschränkt.

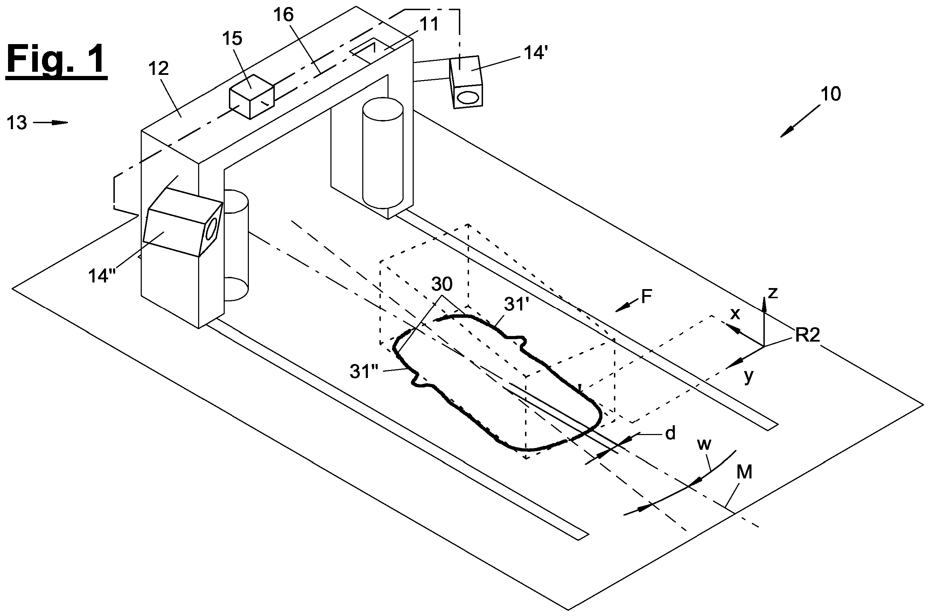

Figur 1 zeigt eine schematische Übersicht einer möglichen Fahrzeugbehandlungsanlage im Sinne dieser Offenbarung.

Die Fahrzeugbehandlungsanlage 10 umfasst eine Anlagensteuerung 11, ein Behandlungsportal 12, ein Konturerkennungssystem 13 sowie zwei Kameras 14', 14". Das Konturerkennungssystem umfasst eine Datenverarbeitungseinheit 15 und eine Anlagenschnittstelle 16.

In Figur 1 ist die Erfindung anhand einer Portalwaschanlage dargestellt. Alternativ zur dargestellten Anlage kann die Fahrzeugbehandlungsanlage auch als Waschstraße oder als eine andere Form einer Fahrzeugbehandlungsanlage ausgeführt sein.

Die Systemarchitektur mit einer von der Anlagensteuerung 11 separaten Datenverarbeitungseinheit 15 des Konturerkennungsystems ist insbesondere vorteilhaft für die Nachrüstung des Konturerkennungssystems zu bestehenden Fahrzeugbehandlungsanlagen. Alternativ oder zusätzlich können auch Komponenten des Konturerkennungssystems in der Anlagensteuerung oder einem anderen Computer vorgesehen sein. Insbesondere können auch Teile des Verfahrens je nach Partitionierung auf unterschiedlichen Computern bzw. Steuerungen ausgeführt werden.

Vorteilhafterweise ist das Konturerkennungssystem bzw. das Verfahren dazu ausgebildet, eine ortsbezogene Fahrzeugkontur 30 zu erkennen.

Die ortsbezogene Fahrzeugkontur 30 lässt sich gegenüber einem ortsbezogenen Koordinatensystem R2 beschreiben. Der Ort (x, y, z) eines oder mehrerer Punkte auf der Kontur ist somit in einem ortsbezogenen Koordinatensystem R2 bestimmbar. Die ortsbezogene Fahrzeugkontur ist gegenüber der Fahrzeugbehandlungsanlage lokalisiert.

Das ortsbezogene Koordinatensystem ist in Figur 1 beispielhaft angeordnet. Das ortsbezogene Koordinatensystem kann beliebig gesetzt werden.

Vorzugsweise werden ortsbezogene Punkte in Bezug auf ein Weltkoordinatensystem oder ein Anlagenkoordinatensystem lokalisiert. Das Anlagenkoordinatensystem kann insbesondere auch an einem zur Welt beweglichen Teil der Anlage, z.B. dem Behandlungsportal oder einem Behandlungsaggregat, festgelegt sein. Es können auch mehrere Koordinatensysteme mit zueinander bekannten Transformationen verwendet werden.

Aus einer ortsbezogenen Fahrzeugkontur lässt sich der Abstand eines bestimmten Punktes der Anlage (z.B. einer in Fig. 1 angedeuteten Waschbürste am Behandlungsportal) zu einem Punkt auf der Fahrzeugkontur berechnen. Auf Basis einer ortsbezogenen Fahrzeugkontur lässt sich insbesondere eine Bahn und/oder ein Anstellwinkel für ein Behandlungsaggregat der Behandlungsanlage berechnen.

Im Gegensatz zu einer lediglich in sich definierten Fahrzeugform, wie man sie beispielsweise aus einer Datenbank für Fahrzeugmodelle abrufen kann, umfasst die ortsbezogene Fahrzeugkontur vorzugsweise mindestens eine Ortsinformation, z.B. eine oder mehrere Positionen oder eine Pose in Bezug zur Fahrzeugbehandlungsanlage.

Die ortsbezogene Fahrzeugkontur kann im Rahmen des beanspruchten Verfahrens in Bezug zur Anlage lokalisiert werden. Alternativ oder zusätzlich kann die Lokalisierung der Fahrzeugkontur auch in einen separaten, z.B. vorgelagerten oder nachgelagerten, Verfahren erfolgen.

Mittels einer ortsbezogenen Fahrzeugkontur 30 kann insbesondere der Versatz d und/oder die Orientierung w des Fahrzeugs F in der Fahrzeugbehandlungsanlage bei der Behandlung des Fahrzeugs berücksichtigt werden. Insbesondere ist die Pose des Fahrzeugs F durch die ortsbezogen ermittelte Fahrzeugkontur bereits vor Beginn des Behandlungsvorgangs bekannt und kann somit schon zur Planung der Behandlung einbezogenen werden. Hierdurch lässt sich die Qualität der Behandlung verbessern.

In der in Figur 1 dargestellten Ausführungsform werden zwei Seitenkonturen 31', 31" ermittelt. Alternativ oder zusätzlich können auch eine oder mehrere Höhenkonturen in dieser oder anderen Ausführungsformen erkannt werden. Die dargestellte Anordnung der Kameras 14', 14" ist besonders vorteilhaft zur Erkennung der Seitenkonturen. Aus der nach vorne (Richtung x), zur Seite (Richtung y) und nach oben (Richtung z) zum Fahrzeug F versetze Position der Kameras entstehen vorteilhafte Perspektiven der Kamerabilder für die Konturerkennung. Besonders zur Erkennung der bodennahen Seitenkonturen ist diese Perspektive gut geeignet.

Die dargestellte Anordnung der Kameras 14', 14" können mit weiteren Kameras wie oben beschrieben ergänzt oder ersetzt werden. Je nach Ausführungsform kann auch nur eine Kamera verwendet werden.

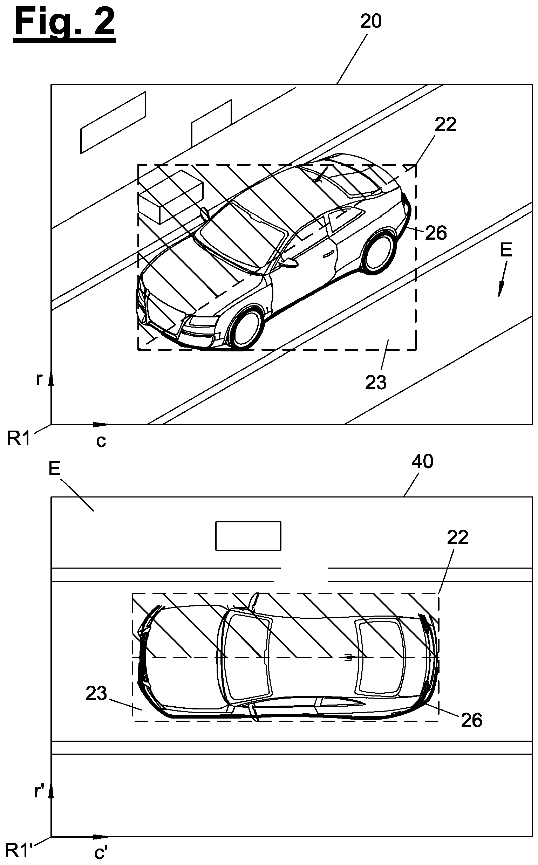

Figur 2 zeigt ein Kamerabild 20 sowie ein transformiertes Kamerabild 40. Das Kamerabild 20 kann direkt oder indirekt von einer Kamera 14" bezogen werden. Vorzugsweise umfasst das Kamerabild 20 Bildinformationen zu einer strukturierten Menge aus Bildpunkten. Die Bildpunkte (Pixel) können als Folge oder auch als Matrix aus Spalten c und Reihen r in einem Bildkoordinatensystem R1 beschrieben werden.

Die Bildpunkte aus einem zweidimensionalen Kamerabild 20 mit einem ersten Bildkoordinatensystem R1 können durch geeignete Transformationen in ein transformiertes Kamerabild 40 mit einem zweiten Bildkoordinatensystem R1' transformiert werden. Jeder Bildpunkt c,r erhält einen bestimmten Transformationspunkt c',r'.

Ein zweidimensionales Kamerabild 20 ist eine Projektion der dreidimensionalen Realität (d.h. der aufgenommenen Szene) auf einen zweidimensionalen Sensor. Durch das Fehlen der dritten Dimension können die mit einem Bildpunkt abgebildeten Punkte des realen Szene nicht ohne weiteres eindeutig in eine andere Perspektive transformiert werden, da grundsätzlich Informationen zur Auflösung der Gleichungen fehlen. Zur Transformation können z.B. Annahmen, a priori Informationen, Schätzungen oder Messungen der Bildtiefe genutzt werden. Insbesondere kann das Kamerabild 20 mittels vorbekannter (extrinsischer) Kameraparameter aus einer Kalibrierung der Kamera und eine Annahme über die Lage der abgebildeten Punkte (z.B. "Punkte liegen auf Bodenhöhe") in eine andere Perspektive, z.B. die Vogelperspektive des transformierten Bildes 40, transformiert werden.

Zur Vereinfachung der Darstellung wurde das transformierte Bild 40 ebenfalls rechteckig dargestellt. In der Praxis verzerrt die abgebildete (dreidimensionale) Szene jedoch bei der Transformation. Wegen der fehlenden Informationen über verdeckte Bereich im Kamerabild 20 (z.B. die rechte Seitenfläche des Fahrzeugs in Figur 2) können naturgemäß in einem transformierten Bild diese Bildbereiche auch nicht berechnet werden.

Bei der Transformation wird vorzugsweise die kalibrierte Pose der aufnehmenden Kamera 14" in Bezug auf ein ortsbezogenes Koordinatensystem R2 verwendet. Durch die Kalibrierung der Kamera kann aus der Ort eines Bildpunktes c,r (z.B. auf einer Bildkontur 26) aus einem Bildkoordinatensystem R1 oder R1' in einem ortsbezogenen Koordinatensystem lokalisiert werden. Beispielsweise kann durch eine Kalibrierung der Kamera ein Bildpunkt auf der Fahrzeugkontur aus dem Kamerabild unter der Annahme, dass dieser in einer bestimmten Ebene E (z.B. auf Bodenhöhe) liegt, in einen Punkt in Weltkoordinaten x,y,z umgerechnet werden.

Zur Erfassung von Fahrzeugkonturen in einem Bild können insbesondere bestimmte Bildbereiche 22 und/oder bestimmte Teilbereiche 23 in einem bestimmten Bildbereich 22 verarbeitet werden. Die Ermittlung eines bestimmten Bildbereichs 22 und/oder einer bestimmten Bildteilbereichs kann insbesondere mittels a priori Informationen, Annahmen, Schätzungen oder Messungen erfolgen. Beispielsweise kann ein rechteckiger Bildbereich 22 um ein zuvor durch Segmentierung bestimmtes Fahrzeugbildsegment ausgeschnitten werden. Zusätzlich kann innerhalb eines bestimmten Bildbereichs 22 ein bestimmter Teilbereich 23, z.B. die untere Hälfte, ausgeschnitten werden. Die Ermittlung solcher Bildbereiche kann insbesondere durch ein trainiertes KI-System erfolgen.

Alternativ oder zusätzlich kann der Bildbereich 22 für einen Bildverarbeitungsschritt (z.B. Erkennung einer Bildkontur) durch die a priori Information ermittelt werden, dass die vorgesehene Parkposition des Fahrzeugs in der jeweiligen Fahrzeugbehandlungsanlage in der vorbestimmten Kameraperspektive näherungsweise in einem bestimmten Bereich des Bildes liegt.

In einer besonders vorteilhaften Ausführungsform wird ein Kamerabild 20 in eine Vogelperspektive transformiert. In der Vogelperspektive lassen sich insbesondere Seitenkonturen besonders gut erkennen. Bei der Transformation in die Vogelperspektive können insbesondere schon mit einfachen Annahmen (z.B. Lage Punkte in einer bodennahen horizontalen Ebene) Fahrzeugkonturen in guter Näherung anhand der Bildkonturen in einem Fahrzeugbildsegment oder in einem Bildbereich bzw. Teilbereich erkannt werden. Unter der Annahme, dass bestimmte Bildbereiche, z.B. die untere Bildhälfte, näherungsweise einen vorbekannten Teil eines Fahrzeugs abbilden, lässt sich in der Vogelperspektive beispielsweise mit einer Kamera in einer geeigneten Pose auf der linken Seite des Fahrzeugs gut die linke Seitenkontur erkennen.

Die in Figur 2 nur beispielhaft gezeigte Bildverarbeitung kann insbesondere mit Kamerabildern mehrere Kameras in mehreren Perspektiven erfolgen.

Insbesondere können bestimmte Fahrzeugkonturen, z.B. die rechte und linke Seitenkontur 31', 31" und/oder eine Höhenkontur, auf Basis bestimmter Kamerabilder verschiedener Kameras berechnet werden.

Die hier offenbarten Verfahrensschritte zur Erkennung der Fahrzeugkontur können in einem oder mehreren (ggfs. vorverarbeiteten) Kamerabilder 20 ausgeführt werden. Alternativ oder zusätzlich können die hier offenbarten Verfahrensschritte auch zumindest teilweise in transformierten Bildern 40 ausgeführt werden.

Die Bildkontur 26, bzw. eine Bildteilkontur 26, am im Bild abgebildeten Fahrzeug F kann insbesondere im Kamerabild 20 oder in einem transformierten Bild 40 ermittelt werden.

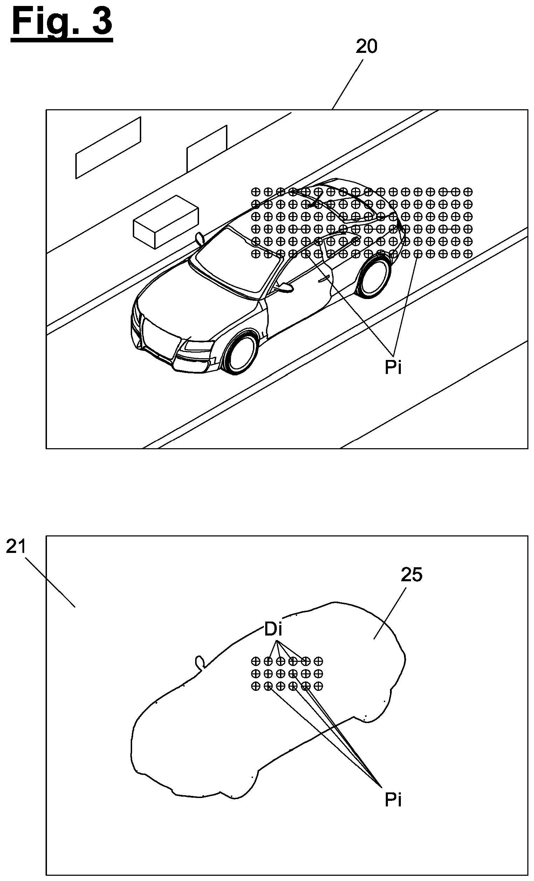

Figur 3 zeigt schematisch die Ermittlung von Tiefeninformationen Di zu einem Kamerabild 20 oder einem bereits segmentierten Fahrzeugbildsegment 25.

Die Messung und/oder Schätzung von Tiefeninformationen kann mit oder ohne Segmentierung des Kamerabilds eingesetzt werden. Die Kombination ist besonders vorteilhaft für die Berechnung eines dreidimensionalen Fahrzeugmodells.

Vorzugsweise werden Tiefeninformationen Di zu einer Szene in einem Kamerabild 20 mittels eines trainierten Tiefenschätzers ermittelt. Alternativ oder zusätzlich können die Tiefeninformationen mittels Disparität einer Stereokameraaufnahme gemessen werden. Auch andere Methoden zur Distanzmessung zu einem Kamerabild sind möglich, z.B. Time-of-Flight-Kameras (TOF).

Vorzugsweise werden die Tiefeninformationen zu einer Vielzahl von Bildpunkten Pi des Kamerabildes 20 geschätzt. Das Kamerabild kann beispielsweise einem Tiefenschätzer mit einem künstlichen neuronalen Netz als Eingangsdatensatz zugeführt werden. Der Tiefenschätzer kann in einer besonders vorteilhaften Ausführungsform mit Bildern und CAD-Daten häufiger Fahrzeugtypen trainiert werden.

Durch Segmentierung des Kamerabilds 20 kann das Fahrzeugbildsegments 25 ermittelt werden. Zur Segmentierung von Kamerabildern stehen dem Fachmann verschiedene Verfahren zur Verfügung. Besonders vorteilhaft ist der Einsatz eines trainierten KI-Systems zur Erkennung eines Fahrzeugbildsegments, vorzugsweise in der jeweils relevanten Perspektive auf das Fahrzeug.

Mittels der Segmentierung des Fahrzeugbildsegments 25 können diejenigen Bildpunkte Pi ermittelt werden, die auch tatsächlich das Fahrzeug F abbilden. Durch die Segmentierung können die Bildpunkte Fahrzeugs vom Hintergrund 21 getrennt werden.

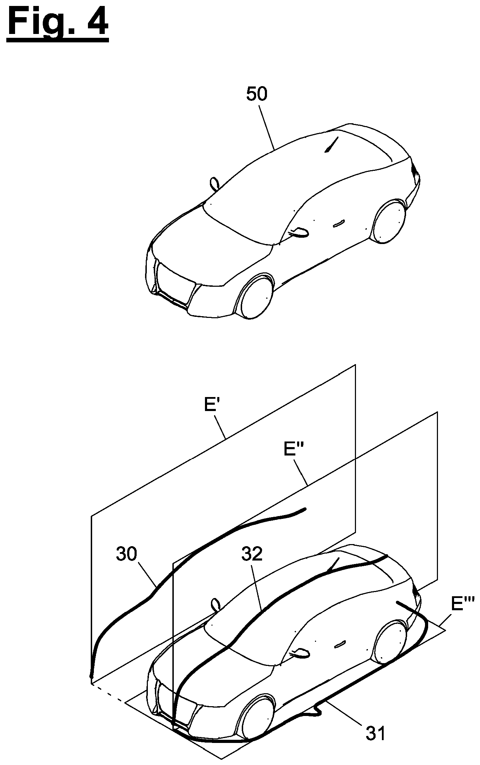

Mittels der Tiefeninformationen Di des Fahrzeugbildsegments 25 kann (zumindest teilweise) ein dreidimensionales Fahrzeugmodell 50 berechnet werden. In Figur 4 ist ein dreidimensionales Fahrzeugmodell 50 schematisch dargestellt.

Das dreidimensionale Fahrzeugmodell 50 bildet vorzugsweise eine (Teil-)Oberfläche des Fahrzeugs ab.

In der Praxis ist das Fahrzeugmodell 50 ein teilweises Modell des Fahrzeugs bzw. der Fahrzeugoberfläche, da nur im Bild vorhandene Bereiche des Fahrzeugs unmittelbar berechnet werden können. Das Fahrzeugmodell kann beispielsweise als dreidimensionale Punktewolke abgebildet werden. Alternativ oder zusätzlich kann die Fahrzeugoberfläche im Fahrzeugmodell durch geometrische Konstrukte angenähert werden.

Vorteilhafterweise ist aus dem Fahrzeugmodell 50 eine Fahrzeugkontur 30 ableitbar. Zur Ableitung der Fahrzeugkontur 30 kann insbesondere der Umriss der Projektion oder eines Schnitts des Fahrzeugmodells auf eine bestimmte Referenzebene E ermittelt werden.

Figur 4 zeigt beispielhaft wie sich aus dem dreidimensionalen Fahrzeugmodell 50 eine Seitenkontur 31 durch Projektion auf eine horizontale Ebene E‴ abbilden lässt. Eine Höhenkontur 32 ist beispielsweise durch den Umriss eines Schnitts mit einer Schnittebene E" oder auch durch Projektion auf eine seitlich versetzte Ebene E' ableitbar.

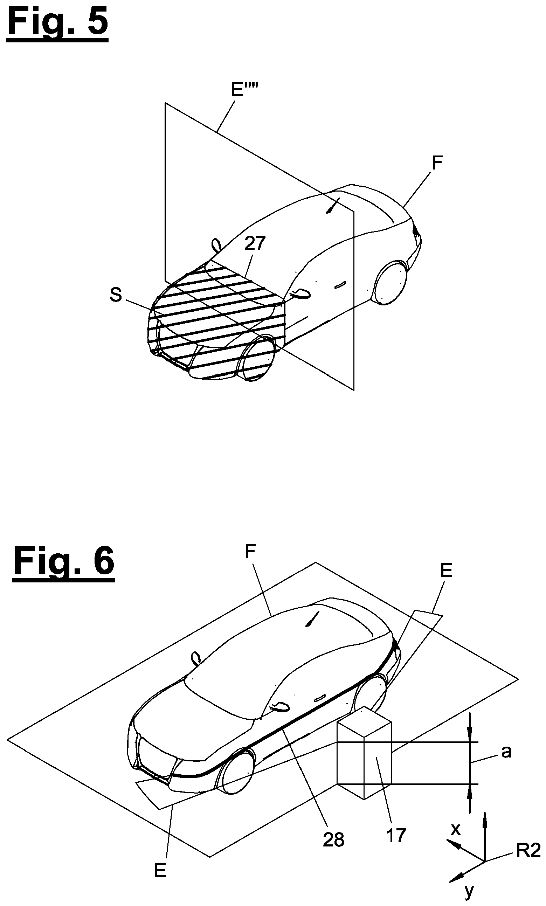

Figur 5 zeigt ein Fahrzeug (F), das in der Fahrzeugbehandlungsanlage mit einem Schaum (S) behandelt wird. Die Schaumbehandlung kann in mehreren Ausführungsformen zur Verbesserung der kamerabasierten Konturerkennung genutzt werden.

**In** einer möglichen Ausführungsform wird der Schaum (S) auf die Oberfläche des Fahrzeugs (F) appliziert, sodass eine erkennbare Schaumgrenzlinie (27) in einer bestimmten Referenzebene (E"") auf der Fahrzeugoberfläche entsteht. Die Applikation des Schaums (S) kann beispielsweise mit einer Schaumapplikationsvorrichtung erfolgen. Die Schaumapplikationsvorrichtung wird vorzugsweise einstellbar über die Fahrzeugoberfläche geführt. Vorzugsweise ist die Position der Schaumapplikationsvorrichtung und/oder die erzeugte Schaumgrenzlinie (27) zu einem bestimmten Zeitpunkt bekannt. Die Position kann beispielsweise aus einer Messung und/oder Regelung der Bewegung der Bewegung der Schaumapplikationsvorrichtung bezogen werden.

Durch die geregelte Applikation des Schaums kann eine kamerabasiert erkennbare Bildkontur (26) erzeugt werden, deren Lage auf einer bestimmten Referenzebene (E) bekannt ist. Lageinformationen der Referenzebene können für die Fahrzeugkonturerkennung bereitgestellt und verarbeitet werden.

Figur 6 zeigt eine mögliche Ausführungsform einer auf die Fahrzeugoberfläche projizierte Lichtlinie (28).

Die Projektion von Lichtlinien auf die Fahrzeugoberfläche kann unabhängig oder in Kombination mit der Applikation von Schaum auf das Fahrzeug eingesetzt werden. Besonders vorteilhaft ist die Applikation von Schaum und die darauffolgende Projektion von Lichtlinien auf das eingeschäumte Fahrzeug. Auf der eingeschäumten Fahrzeugoberfläche können projizierte Lichtlinien besonders gut in einem Kamerabild erkannt werden. Durch die Auftragung von Schaum können insbesondere störende Reflektionen der Fahrzeugoberfläche oder die Transparenz von Fensterscheiben überdeckt werden.

Die Fahrzeugbehandlungsanlage und/oder das Konturerkennungssystem umfasst eine oder mehrere Projektionsvorrichtungen (17). Die Projektionsvorrichtung kann ein oder mehrere Projektionsmittel, z.B. Linienlaser, umfassen. Mit der Projektionsvorrichtung (17) kann eine Lichtlinie, z.B. eine Laserlinie, in einer bestimmten Ebene (E) ausgestrahlt werden. An der Schnittlinie dieser Ebene (E) mit dem Fahrzeug (F) erzeugt erscheint eine Lichtlinie (28) auf der Fahrzeugoberfläche. Die projizierte Lichtlinie (28) liegt in der Ebene (E).

Die Projektionsvorrichtung (17) kann eine oder mehrere statische und/oder bewegte Lichtlinien (28) projizieren. Vorzugsweise ist die Lage der Referenzebene (E), in der die Lichtlinie projiziert wird, durch die statische Positionierung der Projektionsvorrichtung und/oder durch eine einstellbare Lage der Projektionsvorrichtung bzw. einzelner Projektionsmittel ermittelbar. Zum Beispiel können regelbar bewegliche Projektionsmittel eingesetzt werden, deren Lage (a) der Ebene (E) elektronisch erfassbar ist. Die Erfassung kann beispielsweise mittels Sensoren zur Erfassung der Lage, d.h. des Winkels und/oder der Position, erfasst werden. In einer vorteilhaften Ausführungsform wird die Lage der Ebene (E), in der eine Lichtlinie (28) zu einem bestimmbaren Zeitpunkt auf das Fahrzeug projiziert wird in einem ortsbezogenen Koordinatensystem (R2) bestimmt und für die Fahrzeugkonturerfassung bereitgestellt.

Alternativ oder zusätzlich zur dargestellten Ausführungsform können insbesondere eine oder mehrere Projektionsvorrichtungen über dem Fahrzeug (F) angeordnet sein. Beispielsweise können eine oder mehrere Lichtlinien von oben auf das Fahrzeug projiziert werden. Die Lichtlinien können in Längs- und/oder Querrichtung zur Fahrtrichtung projiziert werden.

In der in Figur 5 beispielhaft dargestellten Ausführungsform könnten die Projektionsvorrichtung so neben dem Fahrzeug (F) positioniert sein, dass eine Lichtlinie (28) in einer vorbestimmten Höhe, z.B. 50 cm über dem Boden, parallel zur Bodenebene projiziert werden. Die Lage (a) der Projektionsebene (E) kann beispielsweise durch ein Kalibrierungsverfahren und/oder manuelle Vorgabe bestimmt werden. Alternativ oder zusätzlich könnten mehrere Lichtlinien von oben, der gegenüberliegenden Seite, von vorne oder von hinten projiziert werden.

In einer besonders vorteilhaften Ausführungsform können die projizierten Lichtlinien mit einer bestimmten Charakteristik versehen werden, die in einem Kamerabild erkennbar sind. Beispielsweise können Lichtlinien mit bestimmten bzw. unterschiedlichen Farben, Frequenzen oder Mustern erzeugt werden.

Es können insbesondere eine oder mehrere bewegte Lichtlinien erzeugt werden. Die Lage (a) der Projektionsebenen (E) kann zeitvariabel sein. Vorzugsweise wird die Lage (a) zu mehreren bestimmbaren Zeitpunkten erfasst. Die Lage (a) kann beispielsweise mit einem Zeitstempel, der durch Zeitsynchronisation einem bestimmten Kamerabild zuordenbar ist, versehen werden.

Zur Erkennung der Fahrzeugkontur können die projizierten Lichtlinien als Bildkontur erkannt werden. Durch die gezielte Erzeugung der Lichtlinien in einer bekannten und/oder bestimmbaren Referenzebene (E), kann die zweidimensionale Bildkontur in einem bildbezogenen Koordinatensystem (R1) sehr effizient und präzise in eine räumliche Fahrzeugkontur (30) in einem ortsbezogenen Koordinatensystem (R2) transformiert werden.

Die gezielte Erzeugung von Bildkonturen (26) durch Schaum und/oder projizierte Lichtlinien in bekannten Ebenen (E) ist eine besonders effiziente und günstige Möglichkeit zur kamerabasierten Fahrzeugkonturerkennung in einer Fahrzeugbehandlungsanlage.

### Bezugszeichenliste

- 10: Fahrzeugbehandlungsanlage
- 11: Anlagensteuerung
- 12: Behandlungsportal
- 13: Konturerkennungssystem
- 14: Kamera
- 15: Datenverarbeitungseinheit
- 16: Anlagenschnittstelle
- 17: Projektionsvorrichtung
- 20: Kamerabild
- 21: Hintergrund
- 22: Bildbereich
- 23: Teilbereich
- 25: Fahrzeugbildsegment
- 26: Bildkontur, Bildteilkontur
- 27: Schaumgrenzlinie
- 28: Projizierte Lichtlinie
- 30: Fahrzeugkontur
- 31: Seitenkontur
- 32: Höhenkontur
- 40: transformiertes Kamerabild
- 50: dreidimensionales Fahrzeugmodell
- Di: Tiefeninformationen
- E: Referenzebene, Bodenebene
- F: Fahrzeug
- Pi: Bildpunkte
- R1: bildbezogenes Koordinatensystem
- a: Ebenenlage
- c, r: Bildkoordinaten (column, row)
- R2: ortsbezogenes Koordinatensystem
- S: Schaum
- x, y, z: Ortskoordinaten (Weltkoordinaten oder Anlagenkoordinaten)
- d: Versatz
- w: Orientierung
- M: Mittelachse

## Patentansprüche

1. Computerimplementiertes Verfahren zur Ermittlung einer Fahrzeugkontur (30) eines zu behandelnden Fahrzeugs (F) in einer Fahrzeugbehandlungsanlage (10), wobei eine oder mehrere Fahrzeugkonturen kamerabasiert erkannt werden und mindestens ein Kamerabild (20) bezogen wird, in dem das Fahrzeug (F) in der Fahrzeugbehandlungsanlage (10) abgebildet ist, wobei aus dem Kamerabild (20) mindestens eine in einem ortsbezogenen Koordinatensystem (R2) der Fahrzeugbehandlungsanlage (10) lokalisierbare Fahrzeugkontur (30) des zu behandelnden Fahrzeugs (F) ermittelt und die Fahrzeugkontur (30) über eine Anlagenschnittstelle (16) für eine Anlagensteuerung (11) der Fahrzeugbehandlungsanlage (10) bereitgestellt wird, **dadurch gekennzeichnet, dass** eine oder mehrere Fahrzeugkonturen genutzt werden, um bestimmte Teile des Fahrzeugs sowie deren Position und/oder Größe zu erfassen und/oder zu lokalisieren, insbesondere Räder, Spiegel, Seitenschweller, Scheiben, Scheibenwischer, Anhängerkupplung, Dachbox, Dachgepäckträger, und/oder Heckgepäckträger und wobei ein trainierbares KI-System zur Erkennung der Fahrzeugkontur eingesetzt wird, insbesondere ein künstliches neuronales Netz.

2. Verfahren nach Anspruch 1, wobei
- die Veränderung der Position eines Fahrzeugteils erkannt wird, UND/ODER
- eine unerwartete Position eines Fahrzeugteils erkannt wird.

3. Verfahren nach Anspruch 2, wobei das Öffnen einer Türe oder einer Kofferraumklappe erkannt wird.

4. Verfahren nach einem der vorhergehenden Ansprüche, wobei ein trainiertes KI-System direkt eine Fahrzeugkontur im Kamerabild erkennt.

5. Verfahren nach einem der vorhergehenden Ansprüche, wobei ein KI-System zu mindestens einem der folgenden technischen Einsatzzwecke eingesetzt wird:
- Erkennung von Fahrzeugkonturen und/oder Bildkonturen und/oder Bildteilkonturen in einem Kamerabild; UND/ODER
- Segmentierung eines Kamerabilds zur Ermittlung eines Fahrzeugbildsegments; UND/ODER
- Schätzung der Bildtiefe in einem Kamerabild.

6. Verfahren nach einem der vorhergehenden Ansprüche, wobei das KI-System für den jeweiligen Einsatzzweck vortrainiert ist und optional für den Einsatzzweck nachtrainiert wird.

7. Verfahren nach einem der vorhergehenden Ansprüche, wobei
- das Konturerkennungssystem während des Betriebs mit weiteren Sensordaten nachtrainiert und/oder optimiert wird; UND/ODER
- während der Durchführung des Konturerkennungsverfahrens Daten für das Training eines trainierbaren Konturerkennungssystems gesammelt und/oder aufbereitet werden.

8. Verfahren nach einem der vorhergehenden Ansprüche, wobei das KI-System mit händisch oder maschinell aufbereiteten Trainingsdaten trainiert ist, die bereits eine korrekte Zuordnung einer Fahrzeugkontur zu einem Kamerabild enthalten.

9. Verfahren nach einem der vorhergehenden Ansprüche, wobei das Kamerabild (20) in mehrere Bildsegmente segmentiert wird, wobei Teile des Kamerabildes (20), die das Fahrzeug (F) abbilden, einem Fahrzeugbildsegment (25) zugeordnet werden.

10. Verfahren nach einem der vorhergehenden Ansprüche, wobei zur Ermittlung des Fahrzeugbildsegments (25) ein Differenzbild aus zwei Kamerabildern (20) derselben Szene in der Fahrzeugbehandlungsanlage (10), nämlich mit dem Fahrzeug (F) und ohne das Fahrzeug (F), erzeugt wird.

11. Verfahren nach einem der vorhergehenden Ansprüche, wobei zur Segmentierung des Kamerabildes (20), insbesondere zur Ermittlung des Fahrzeugbildsegments (25), eine semantische Segmentierung, vorzugsweise durch eine trainierbare Segmentierungseinheit, durchgeführt wird.

12. Verfahren nach einem der vorhergehenden Ansprüche, wobei mehrere Kamerabilder bezogen werden, wobei die mehreren Kamerabilder dasselbe Fahrzeug (F) aus unterschiedlichen Perspektiven mehrerer Kameras (14', 14") insbesondere von der linken und der rechten Seit des Fahrzeugs, abbilden.

13. Konturerkennungssystem zur Erkennung mindestens einer Fahrzeugkontur eines zu behandelnden Fahrzeugs (F) in einer Fahrzeugbehandlungsanlage (10), wobei das Konturerkennungssystem mindestens eine Datenverarbeitungseinheit und mindestens eine Kamera (14', 14") umfasst, wobei das Konturerkennungssystem (13) dazu ausgebildet ist, ein Verfahren nach einem der vorhergehenden Ansprüche auszuführen.

14. Fahrzeugbehandlungsanlage mit einem Konturerkennungssystem (30) nach dem vorhergehenden Anspruch

## Claims

1. Computer-implemented method for determining a vehicle contour (30) of a vehicle (F) to be treated in a vehicle treatment facility (10), wherein one or more vehicle contours are detected using a camera and at least one camera image (20) is obtained in which the vehicle (F) is depicted within the vehicle treatment facility (10), wherein from the camera image (20), at least one localizable vehicle contour (30) of the vehicle (F) to be treated, which can be localised in a location-based coordinate system (R2) of the vehicle treatment facility (10), is determined, and the vehicle contour (30) is made available via a facility interface (16) to a facility control system (11) of the vehicle treatment facility (10), **characterised in that** one or more vehicle contours are used to detect and/or locate specific parts of the vehicle as well as their position and/or size, in particular wheels, mirrors, side skirts, windows, windscreen wipers, tow bar, roof box, roof rack, and/or rear luggage rack, and wherein a trainable AI system for recognising the vehicle contour is used, in particular an artificial neural network.

2. Method according to claim 1, wherein
- a change in the position of a vehicle component is detected, AND/OR
- an unexpected position of a vehicle component is detected.

3. Method according to claim 2, wherein the opening of a door or a boot lid is detected.

4. Method according to any one of the preceding claims, wherein a trained AI system directly detects a vehicle contour in the camera image.

5. Method according to any of the preceding claims, wherein an AI system is used for at least one of the following technical purposes:
- Detection of vehicle contours and/or image contours and/or partial image contours in a camera image; AND/OR
- Segmentation of a camera image to determine a vehicle image segment; AND/OR
- Estimation of image depth in a camera image.

6. Method according to any of the preceding claims, wherein the AI system is pre-trained for the specific application and may optionally be retrained for that application.

7. Method according to one of the preceding claims, wherein
- the contour detection system is retrained and/or optimised during operation using additional sensor data; AND/OR
- during the execution of the contour detection method, data for training a trainable contour detection system is collected and/or processed.

8. Method according to any of the preceding claims, wherein the AI system is trained using training data prepared manually or automatically, which already contains a correct assignment of a vehicle contour to a camera image.

9. Method according to one of the preceding claims, wherein the camera image (20) is segmented into several image segments, wherein parts of the camera image (20) that depict the vehicle (F) are assigned to a vehicle image segment (25).

10. Method according to one of the preceding claims, wherein, to determine the vehicle image segment (25), a difference image is generated from two camera images (20) of the same scene in the vehicle treatment facility (10), namely with the vehicle (F) and without the vehicle (F).

11. Method according to one of the preceding claims, wherein, for the segmentation of the camera image (20), in particular for determining the vehicle image segment (25), a semantic segmentation is performed, preferably by a trainable segmentation unit.

12. Method according to one of the preceding claims, wherein a plurality of camera images are obtained, the plurality of camera images depicting the same vehicle (F) from different perspectives of a plurality of cameras (14', 14"), in particular from the left and right sides of the vehicle.

13. Contour detection system for detecting at least one vehicle contour of a vehicle (F) to be treated in a vehicle treatment facility (10), wherein the contour detection system comprises at least one data processing unit and at least one camera (14', 14"), wherein the contour detection system (13) is designed to perform a method according to one of the preceding claims.

14. Vehicle treatment facility with a contour detection system (30) according to the preceding claim.

## Revendications

1. Procédé mis en œuvre par ordinateur pour déterminer un contour de véhicule (30) d'un véhicule (F) à traiter dans une installation de traitement de véhicules (10), un ou plusieurs contours de véhicule étant reconnus à l'aide d'une caméra et au moins une image de caméra (20) étant obtenue, dans laquelle le véhicule (F) est représenté dans l'installation de traitement de véhicules (10), au moins un contour de véhicule (30) du véhicule à traiter (F) localisable dans un système de coordonnées en référence au lieu (R2) de l'installation de traitement de véhicules (16) étant déterminé à partir de l'image de caméra (20) et le contour de véhicule (10) étant mis à disposition par l'intermédiaire d'une interface d'installation (10) pour une commande d'installation (11) de l'installation de traitement de véhicules (30), **caractérisé en ce qu'**un ou plusieurs contours de véhicule sont utilisés pour détecter et/ou pour localiser certaines parties du véhicule ainsi que leur position et/ou leur taille, notamment les roues, les rétroviseurs, les jupes latérales, les vitres, les essuie-glaces, un attelage de remorque, un coffre de toit, une galerie de toit et/ou un porte-bagages arrière, et un système d'IA pouvant être entraîné étant utilisé pour reconnaître le contour de véhicule, en particulier un réseau neuronal artificiel.

2. Procédé selon la revendication 1,
- la modification de la position d'une partie du véhicule étant reconnue, ET/OU
- une position inattendue d'une partie de véhicule étant reconnue.

3. Procédé selon la revendication 2, l'ouverture d'une portière ou d'un volet de coffre étant reconnue.

4. Procédé selon l'une des revendications précédentes, un système d'IA entraîné reconnaissant directement un contour de véhicule dans l'image de caméra.

5. Procédé selon l'une des revendications précédentes, un système d'IA étant utilisé pour au moins l'une des applications techniques suivantes :
- reconnaissance de contours de véhicule et/ou de contours d'image et/ou de contours de partie d'image dans une image de caméra ; ET/OU
- segmentation d'une image de caméra afin de déterminer un segment d'image de véhicule ; ET/OU
- estimation de la profondeur d'image dans une image de caméra.

6. Procédé selon l'une des revendications précédentes, le système d'IA étant préentraîné pour l'application respective et, facultativement, étant réentraîné pour l'application.

7. Procédé selon l'une des revendications précédentes,
- le système de reconnaissance de contour étant réentraîné et/ou optimisé en fonctionnement avec des données de capteur supplémentaires ; ET/OU
- pendant la mise en œuvre du procédé de reconnaissance de contours, des données pour l'entraînement d'un système de reconnaissance de contours pouvant être entraîné étant collectées et/ou préparées.

8. Procédé selon l'une des revendications précédentes, le système d'IA étant entraîné avec des données d'entraînement préparées manuellement ou automatiquement, qui contiennent déjà une attribution correcte d'un contour de véhicule à une image de caméra.

9. Procédé selon l'une des revendications précédentes, l'image de caméra (20) étant segmentée en plusieurs segments d'image, des parties de l'image de caméra (20) qui représentent le véhicule (F) étant attribuées à un segment d'image de véhicule (25).

10. Procédé selon l'une des revendications précédentes, une image différentielle étant générée à partir de deux images de caméra (20) de la même scène dans l'installation de traitement de véhicules (10), à savoir avec le véhicule (F) et sans le véhicule (F), en vue de déterminer le segment d'image du véhicule (25).

11. Procédé selon l'une des revendications précédentes, une segmentation sémantique étant effectuée en vue de segmenter l'image de caméra (20), notamment en vue de déterminer le segment d'image de véhicule (25), de préférence par une unité de segmentation entraînable.

12. Procédé selon l'une des revendications précédentes, plusieurs images de caméra étant obtenues, les plusieurs images de caméra représentant le même véhicule (F) depuis différentes perspectives de plusieurs caméras (14', 14"), en particulier depuis les côtés gauche et droit du véhicule.

13. Système de reconnaissance de contour destiné à reconnaître au moins un contour de véhicule d'un véhicule (F) à traiter dans une installation de traitement de véhicules (10), le système de reconnaissance de contour comprenant au moins une unité de traitement de données et au moins une caméra (14', 14"), le système de reconnaissance de contour (13) étant configuré pour mettre en œuvre un procédé selon l'une des revendications précédentes.

14. Installation de traitement de véhicules comprenant un système de reconnaissance de contour (30) selon la revendication précédente.
